# EUROPEAN PATENT SPECIFICATION

(11) **EP 0 992 591 B1**
(45) Date of publication and mention of the grant of the patent: **12.01.2005**
(21) Application number: 99119133.9
(22) Date of filing: 05.10.1999
(51) Int. Cl.: C21D 8/12

(54) **Grain-oriented electrical steel sheet and production method thereof**
Kornorientiertes Elektrostahlblech und Verfahren zu seiner Herstellung
Tôle d'acier électromagnétique à grains orientés et procédé pour sa fabrication

(30) Priority: 06.10.1998 JP 28403498
(43) Date of publication of application: 12.04.2000
(73) Proprietor: NIPPON STEEL CORPORATION, Tokyo 100-8071 (JP)
(72) Inventor: Sakai, Tatsuhiko, Futtsu City, Chiba 293-0011 (JP); Minamida, Katsuhiro, Futtsu City, Chiba 293-0011 (JP); Sugiyama, Kimihiko, Tobata-ku, Kitakyushu City, Fukuoka (JP); Mogi, Hisashi, Tobata-ku, Kitakyushu City, Fukuoka (JP); Fujikura, Masahiro, Futtsu City, Chiba 293-0011 (JP)
(74) Representative: VOSSIUS & PARTNER

(56) References cited:
- US-A- 4 322 481
- US-A- 4 513 597
- US-A- 4 750 949
- PATENT ABSTRACTS OF JAPAN vol. 006, no. 182 (E-131), 18 September 1982 (1982-09-18) & JP 57 097606 A (KAWASAKI STEEL CORP), 17 June 1982 (1982-06-17)
- PATENT ABSTRACTS OF JAPAN vol. 1996, no. 04, 30 April 1996 (1996-04-30) & JP 07 316655 A (KAWASAKI STEEL CORP), 5 December 1995 (1995-12-05)
- PATENT ABSTRACTS OF JAPAN vol. 005, no. 111 (C-063), 18 July 1981 (1981-07-18) & JP 56 051522 A (NIPPON STEEL CORP), 9 May 1981 (1981-05-09) & JP 58 026405 B 2 June 1983 (1983-06-02)
- PATENT ABSTRACTS OF JAPAN vol. 011, no. 267 (C-443), 28 August 1987 (1987-08-28) & JP 62 067114 A (NIPPON STEEL CORP), 26 March 1987 (1987-03-26) & JP 63 044804 B 7 September 1988 (1988-09-07)
- PATENT ABSTRACTS OF JAPAN vol. 1995, no. 11, 26 December 1995 (1995-12-26) & JP 07 220913 A (NIPPON STEEL CORP), 18 August 1995 (1995-08-18)

## Description

This invention relates to a grain-oriented electrical steel sheet that retains a low iron loss and a high magnetic flux density even after stress-relief annealing and can be applied to both of a stacked core and a wound core, and a method of producing the same.

One of the methods of producing a grain-oriented electrical steel sheet is described in Japanese Unexamined Patent Publication (Kokai) No. 58-26405. This method irradiates laser energy onto the surface of a steel sheet to form a 180° magnetic domain wall, finely divides the magnetic domains and thus lowers the iron loss. According to this method, the coating film on the surface of the steel sheet is evaporated by laser irradiation, a strain is imparted to the surface layer of the steel sheet by the reaction to evaporation, and a closure magnetic domain is formed in the proximity of the laser irradiated portion. The newly generated closure magnetic domain in this way increases the static magnetic energy but the magnetic domain is finely divided in such a manner as to minimize this increased static magnetic energy with the result that the iron loss can be improved. Due to the improvement of the iron loss by this domain fine dividing effect, the iron loss value can be lowered to a minimum value that is determined by the degree of crystal orientation of the material. Since this prior art method does not involve any physical deformation that would otherwise greatly impede the magnetic flux density, the method is almost free from a drop in the magnetic flux density after the laser irradiation.

For these reasons, the grain-oriented electrical steel sheet produced by this method exhibits ideal magnetic properties.

Nonetheless, the strain that functions as the source of fine division of the magnetic domain disappears at around 500°C during heat-treatment and, at this time, the iron loss lowering effect also disappears.

In other words, the iron loss lowering effect in the grain-oriented electrical steel sheet produced by the prior art method cannot withstand stress-relief annealing, that is conducted at about 800°C in a production process for a wound iron core, and disappears.

For this reason, the grain-oriented electrical steel sheet produced by this method cannot be used for wound cores, but is used exclusively for stacked cores.

Therefore, methods have been proposed, as magnetic domain refinement technologies capable of withstanding stress-relief annealing which impart portions having mutually different permeability values to the surface of the steel sheet in the direction of application of the magnetic field. Speaking more concretely, the methods that form linear or dotted line-like regions having mutually different permeability values in a direction substantially perpendicular to the rolling direction on the steel sheet surface, and various products produced by the methods, have been proposed. Among them, the magnetic domain refinement technology that forms grooves on the surface layer of the steel sheet, and utilizes the difference of permeability between a base metal and air is an excellent technology, and this technology has already been put into industrial application. Incidentally, a method that mechanically pushes a gear type roll into the steel sheet (Japanese Examined Patent Publication (Kokoku) No. 63-44804), a method that employs chemical etching (U.S.P. No. 4,750,949) and a processing method that uses pulsed laser energy (Japanese Unexamined Patent Publication (Kokai) No. 7-220913) have been proposed as the methods for forming the grooves.

In all of these grain-oriented electrical steel sheets that are produced by the prior art methods and have both a low iron loss and a resistance to disappear by annealing, the grooves are formed on only one of the surfaces of the steel sheets. In this case, the depth of the grooves must be from about 15 to 30 µm when the steel sheet thickness is 0.23 mm, in order to obtain a practically sufficient iron loss lowering effect, though the groove depth varies depending on the means employed for forming the grooves. In other words, a deep groove exceeding 5% of the sheet thickness must be formed. Because the iron loss lowering effect considerably changes with the change of the groove depth, the groove depth must be controlled carefully. Therefore, the conventional products are not yet free from the following problems in the product properties and in the production method.

First, the problems in the product properties will be explained. Because the deep groove that exceeds 15 µm, or 5% of the sheet thickness, is formed physically in the surface layer of the steel sheet, there exists a great hindrance to the magnetic flux density. In other words, the problem remains in that the magnetic flux density occurring in an arbitrary external magnetic flux drops greatly after the formation of the groove when compared with the magnetic flux density before the formation of the groove. Furthermore, because the iron loss lowering effect considerably changes with the change of the groove depth, variance in the iron loss characteristics of the products becomes great unless the groove depth is sufficiently controlled.

Next, the problems in the production method will be explained. In order to improve the iron loss by adding grooves, a groove having a depth of 15 to 30 µm is required, as described above. However, loads on the production method are great in order to form such a deep groove throughout the full width of the steel sheet which is more than 1 m wide, and various problems develop in the aspects of the costs of installation and operation, and the production rate. In the case of the mechanical method that pushes a gear type roll into the steel sheet, the force must be elevated in order to provide the steel sheet with a deep groove and, consequently, the setup becomes greater in scale. As the gear type roll is worn out, the groove depth becomes smaller, and another problem develops in that the gear type roll must be exchanged frequently. The chemical etching method requires a long etching time, and the processing speed is limited. To improve the etching rate, a longer etching tank becomes necessary. In the case of the laser method, too, the laser power must be increased for deep groove processing. In consequence, the setup becomes greater in size, and a plurality of large laser generators are necessary.

If the irradiation laser power is increased in the case of the laser method, the influence of heat is excessively applied to the peripheral portions of the irradiated portion, so that swell deformation occurs throughout the steel sheet. If such steel sheets are stacked to produce the stacked core, the iron loss increases or a space factor is deteriorated. Therefore, the steel sheet in which deep grooves are formed by the laser method involves still another problem in that the steel sheet cannot be used for the stacked core.

The laser method is an excellent technology because it can execute non-contact high speed processing, has simple process and is excellent in controllability of the groove depth and positional accuracy of the groove formation positions. However, it involves the problem that when a deep groove is to be formed, it imparts an excessive heat influence onto the peripheral portions of the irradiated portion and invites the deformation of the steel sheet that would deteriorate the magnetic properties.

It is an object of the present invention to provide a grain-oriented electrical steel sheet excellent in magnetic properties, which has a domain refinement effect capable of withstanding stress-relief annealing that is to be executed in a production process of a wound core, can be applied to a wound core, can stably reduce the iron loss, is free from deterioration of a magnetic flux density, can restrict deformation, can be applied also to a stacked core and can reduce the load of production setups, and to provide also a method of producing the same.

The inventors have formed various grooves and/or heat-affected layers on a grain-oriented electrical steel sheet by the laser method, and have examined in detail the magnetic properties after the steel sheet is subjected to stress-relief annealing. As a result, the inventors have found that extremely excellent magnetic properties can be obtained in comparison with those of the conventional grain-oriented electrical steel sheet, by forming either heat-affected layers or grooves and heat-affected layers on both surfaces of the steel sheet.

The present invention has been achieved on the basis of the finding described above, and the gist of the present invention resides in the following points.

In the present invention, either linear or dotted line-like melted and resolidified layers formed by irradiation of a high energy beam or linear or dotted line-like grooves and melted and resolidified layers formed by irradiation of a high energy beam, that remain even after stress-relief annealing, are formed on both surfaces of the steel sheet. Therefore, the iron loss is lowered to minimum. Because this iron loss lowering quantity hardly depends on the groove depth, the grain-oriented electrical steel sheet has a small variance in magnetic properties. Because the groove depth necessary for lowering the iron loss is minimized and because the groove depth need not be strictly controlled in the present invention, the grain-oriented electrical steel sheet does not add large loads to the production setups. In the present invention, the groove depth on both surfaces of the steel sheet is preferably limited to 5% or less of the steel sheet. Therefore, the grain-oriented electrical steel sheet of the present invention is almost free from the drop of the magnetic flux density. In the present invention, the formation positions of the heat-affected layers or of the grooves and the heat-affected layers on both surfaces of the steel sheet form pairs, and their positional deviation is not greater than the width of the heat-affected layers or of the grooves and the heat-affected layers in the rolling direction. Therefore, the steel sheet can provide a large lowering effect of the iron loss and at the same time, is free from the swell deformation that is the problem in the steel sheet for the stacked core. In consequence, the steel sheet can be applied to both the stacked core and the wound core. Furthermore, because the present invention uses beams having high energy, particularly a continuous wave or a pulse laser, the present invention provides a production method for a grain-oriented electrical steel sheet capable of forming either the heat-affected layers or the grooves and the heat-affected layers on both surfaces of the steel sheet with high positional accuracy.

Incidentally, the heat-affected layer is defined in the present invention as melted and resolidified layers that are formed by the irradiation of the high energy beams such as laser, electron beams, and so forth. Such a layer has a permeability different from that of the steel sheet base metal and has a layer volume to such an extent as to be capable of providing a magnetic domain refinement effect to the steel sheet. This heat-affected layer can be easily confirmed by observing a section of the steel sheet through a microscope.

Preferred embodiments of the invention will be described in connection with the drawings in which:

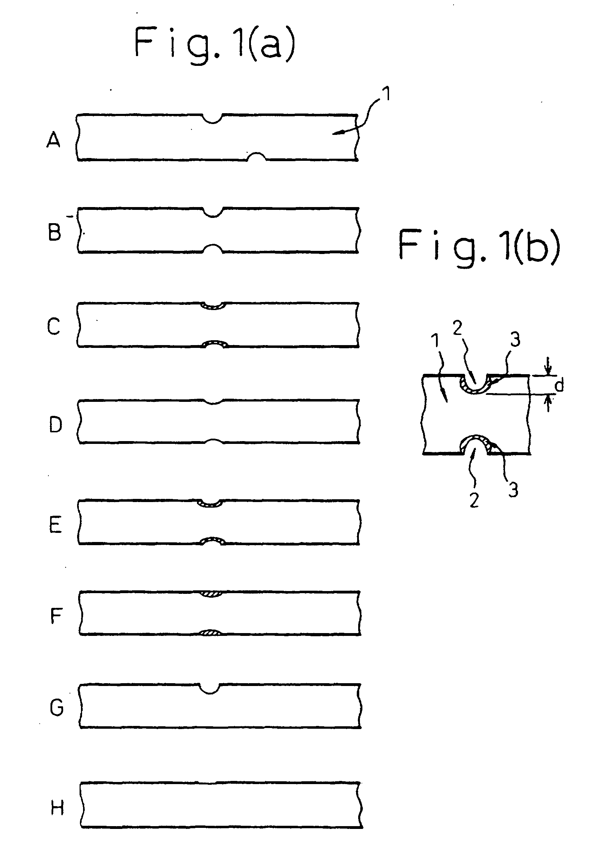

Fig. 1(a) is a sectional view showing various sectional shapes of grain-oriented electrical steel sheets, wherein steels A to F show the sectional shapes of grain-oriented electrical steel sheets that have grooves and/or heat-affected layers on both surfaces thereof; a steel G shows the sectional shape of a grain-oriented electrical steel sheet which has a resistance to disappear by annealing according to the prior art and in which a groove is formed on one of the surfaces; and a steel H shows the sectional shape of a grain-oriented electrical steel sheet devoid of a resistance to disappear by annealing, in which a magnetic domain is finely divided by only the reaction of evaporation of a steel sheet film due to laser irradiation;
Fig. 1(b) is an enlarged view showing in magnification the grooves and the heat-affected layers in various sectional shapes shown in Fig. 1(a);
Fig. 2(a) is an explanatory view useful for explaining the deviation of the groove formation positions on both surfaces of a grain-oriented electrical steel sheet;
Figs. 2(b) and 2(c) are explanatory views showing the results of measurement of the surface coarseness after stress-relief annealing is applied to the grain-oriented electrical steel sheet having either the heat-affected layers or the grooves and the heat-affected layers according to the present invention;
Fig. 3(a) is an explanatory view showing the grain-oriented electrical steel sheet and useful for explaining its production method according to the present invention; and
Fig. 3(b) is an enlarged view showing a part (a portion of a white circle ○ in Fig. 3(a)) of a dotted line-like groove shown in Fig. 3(a).

Initially, a production method of the grain-oriented electrical steel sheet according to the present invention will be explained.

The production method of the grain-oriented electrical steel sheet according to the present invention forms grooves and heat-affected layers, or only the heat-affected layers, on both surfaces of the grain-oriented electrical steel sheet. These heat-affected layers or grooves and heat-affected layers are formed by high energy processing technologies using laser energy, electron beams, ion beams, plasma, and so forth. Among them, the technology that uses a laser (laser process) is most preferred as the production method of the grain-oriented electrical steel sheet according to the present invention from the aspects of beam irradiation positional accuracy, controllability of the formation of heat-affected layers or of the grooves and heat-affected layers and usability in atmospheric air, in comparison with methods using other energy beams.

Incidentally, the object of the invention can be provided if only heat-affected layers or grooves and heat-affected layers for a resistance to heat applied by annealing are formed on the surface layers of the final product. Therefore, the heat-affected layers or grooves and heat-affected layers may be formed at any process steps of an ordinary production process of the grain-oriented electrical steel sheets.

Hereinafter, the grain-oriented electrical steel sheet according to the present invention will be explained where a laser is used as the energy beam source, by way of example. If the power density of a laser is extremely high and its irradiation time is short when the laser energy is irradiated to the steel sheet, the steel sheet base metal at its irradiated portion is melted instantaneously, and almost all the irradiated portion evaporates, thereby forming a groove. At this time, heat-affected layers are slightly formed on the side surface and the bottom of the groove so formed. However, because the volume of this heat-affected layer is extremely small, the heat-affected layer does not exhibit by itself the magnetic domain refinement effect, though its permeability is different from that of the base metal. Therefore, this heat-affected layer is not included in the heat-affected layer that is defined in the present invention. Additionally, the groove formed thereby is essentially the same as the groove that is formed without applying heat at all such as by a etching process.

Next, if the irradiation time is prolonged or if the power density is lowered when the laser energy is irradiated to the steel sheet, the metal of the irradiated portion is not evaporated. In consequence, the amount of the components that are re-solidified from the melt state increases, the groove is formed and, at the same time, a heat-affected layer that has a thickness substantially equal to the groove depth and comprises a melted and re-solidified layer is formed. Since the permeability of this heat-affected layer is different from the permeability of the base metal, it changes the magnetic field in the same way as the groove. In other words, this heat-affected layer has the domain refinement effect. Therefore, this heat-affected layer is included in the heat-affected layers defined in the present invention.

If the power density of the laser is further lowered when the laser energy is irradiated to the steel sheet, the metal of the irradiated portion does not reach the melting point, and melted and resolidified layers devoid of a groove formation are formed. Even in such a case, the laser irradiated portion has a certain repeated heating-cooling cycle, and its permeability is therefore different from that of the base metal. As a result, this layer exhibits the domain refinement effect. For this reason, this layer is included in the heat-affected layers defined in the present invention.

As explained above, the present invention can provide a grain-oriented electrical steel sheet that has both a high magnetic flux density and a low iron loss, has extremely stable properties and can be applied to both of the stacked core and the wound core. In the present invention, the depth of the groove to be formed is small, and the groove depth need not be strictly controlled. Therefore, the load on production setups can be mitigated. When the high energy beam, particularly the laser beam, is used for the production method of the present invention, the optimum heat-affected layers or grooves and heat-affected layers can be formed easily and with high accuracy.

Hereinafter, the present invention will be explained further in detail with reference to Examples thereof. However, these examples are merely illustrative but in no way restrictive.

### Example 1:

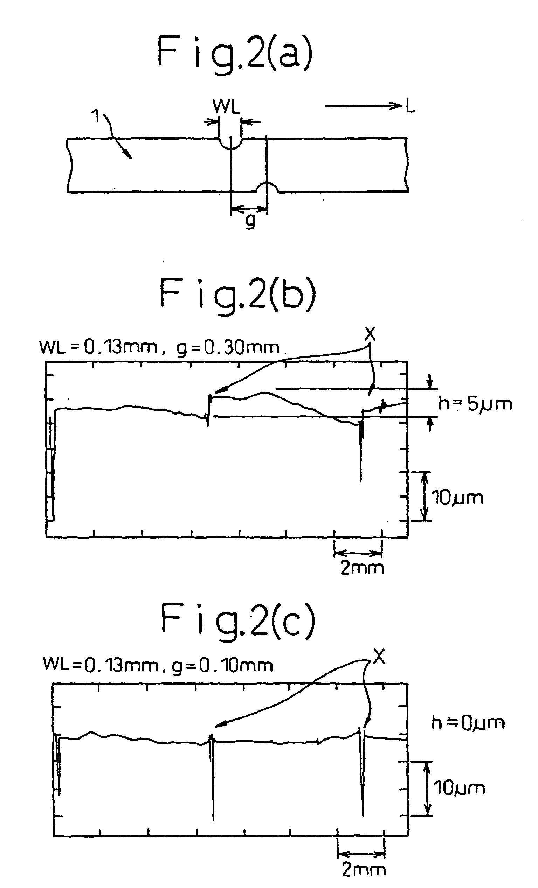

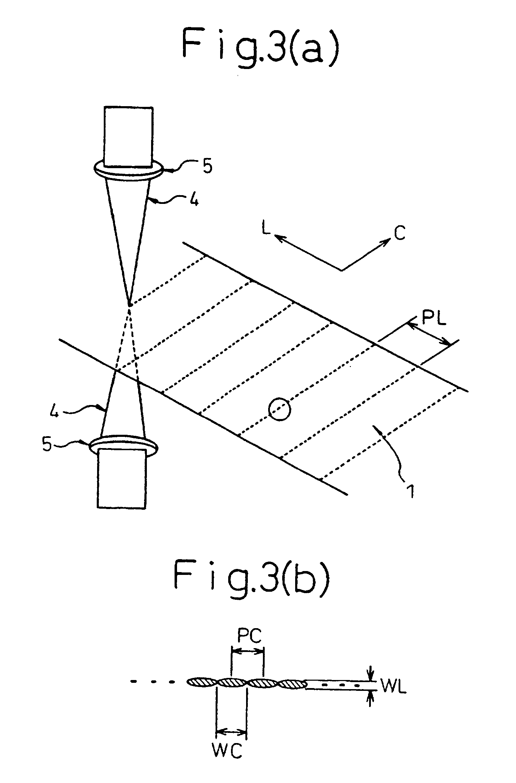

Fig. 3(a) is an explanatory view useful for explaining the grain-oriented electrical steel sheet and the production method thereof according to the present invention. Pulse laser beams 4 outputted from a laser apparatus, not shown, and focused by a lens 5 form dotted line-like heat-affected layers or dotted line-like grooves and heat-affected layers with gaps PL = 6.5 mm in an L direction. Fig. 1(a) shows various sectional shapes of the grain-oriented electrical steel sheets having such grooves and/or heat-affected layers formed in this way, and Fig. 1(b) shows in enlargement the grooves 2 and the heat-affected layers 3 formed in this way. In the steel sheets A to G shown in Fig. 1(a), the diameter of the focused laser beam was 0.1 mm in the L direction and 0.3 mm in the C direction. The width of the dotted line-like grooves formed by such a beam was WL = 0.13 mm in the L direction and WC = 0.31 mm in the C direction, respectively. The dotted line-like gap PC in the C direction was 0.30 mm. As shown in Fig. 3(b), therefore, the dotted line-like grooves in the C direction are adjacent to one another. Here, the depth of the groove is defined by the maximum value d of the depth as shown in Fig 1(b). Deviation of the groove formation positions on both surfaces is defined by a value g shown in Fig. 2(a).

Table 1 shows the evaluation result of the magnetic properties of each steel sheet. Here, the iron loss value was an iron loss value W17/50 at 50 Hz and the maximum magnetic flux density 1.7T, and the magnetic flux density was a value B8 at a magnetizing force 0.8 A/m. The steel sheet was a 0.23 mm-thick grain-oriented electrical steel sheet having an insulating film on the surface thereof. For comparison, the magnetic properties of the steel sheet the iron loss of which was reduced by laser strain, and which was for exclusive use for a stacked core, are also shown in the table. The laser irradiation condition, and the conditions for the grooves, the heat-affected layers, etc, of each steel sheet are listed below. Incidentally, the existence of the grooves and the heat-affected layer was confirmed by inspecting the section of the steel sheet through a microscope.

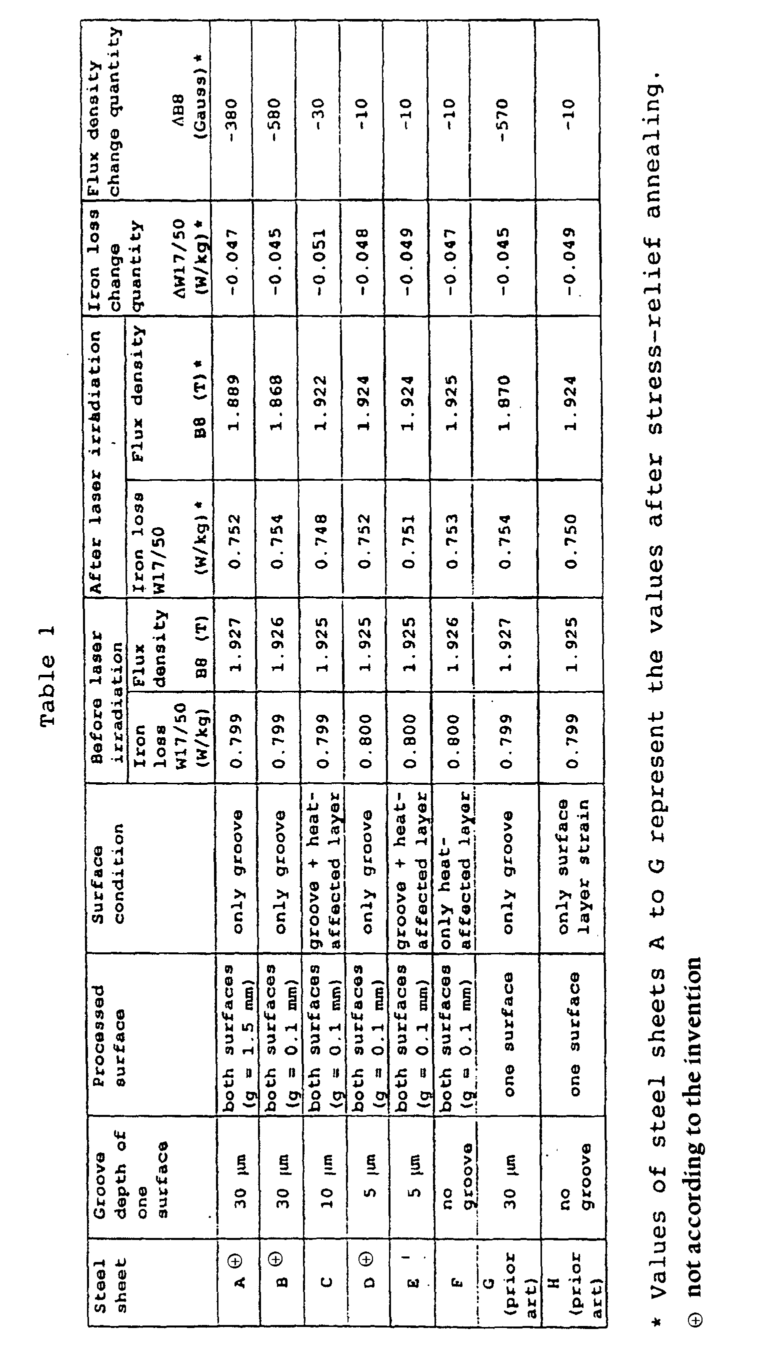

### Steel sheet A:

Grooves having a depth of 30 µm were formed on both surfaces of the steel sheet by Q switch pulse CO₂ laser. The peak power density of the Q switch pulse CO₂ laser was about 10 to about 30 MW/mm², and the pulse time total width was 20 µs. The laser irradiated portion was evaporated almost fully by the high peak pulse processing. The heat-affected layer defined by the present invention did not exist at the irradiated portion, and only the grooves existed. The deviation g of the groove formation positions on both surfaces of the steel sheet was about 1.5 mm, and was greater than the width WL of the grooves in the L direction.

### Steel sheet B:

Grooves having a depth of 30 µm were formed on both surfaces of the steel sheet by Q switch pulse CO₂ laser. Here, the peak power density of the Q switch pulse CO₂ laser was about 10 to about 30 MW/mm², and the pulse time total width was 20 µs. The laser irradiated portion was evaporated almost fully. The heat-affected layer defined by the present invention did not exist at the irradiated portion, and only the grooves existed. The deviation g of the groove formation positions on both surfaces of the steel sheet was about 0.1 mm, and was smaller than the width WL of the grooves in the L direction.

### Steel sheet C:

Grooves having a depth of 10 µm were formed on both surfaces of the steel sheet by pulse modulated CO₂ laser. The peak power density of the pulse laser was 0.4 to 0.8 MW/mm², and the pulse time total width was 20 µs. Because of the decrease of the pulse peak power, the grooves and the heat-affected layers that are defined by the present invention existed in mixture at the irradiated portion. The deviation g of the groove formation positions on both surfaces of the steel sheet was 0.1 mm, and was smaller than the width WL of the grooves in the L direction.

### Steel sheet D:

Grooves having a depth of 5 µm were formed on both surfaces of the steel sheet by Q switch pulse CO₂ laser. Here, the peak power density of the Q switch pulse CO₂ laser was about 10 to about 30 MW/mm², and the pulse time total width was 12 µs. Because of high peak pulse processing, the laser irradiated portion was evaporated almost fully. The heat-affected layer defined by the present invention did not exist at the irradiated portion, and only the grooves existed. The deviation g of the groove formation positions on both surfaces of the steel sheet was about 0.1 mm, and was smaller than the width WL of the grooves in the L direction.

### Steel sheet E:

Grooves having a depth of 5 µm were formed on both surfaces of the steel sheet by pulse modulated CO₂ laser. Here, the peak power density of the pulse laser was 0.4 to 0.8 MW/mm² and the pulse time total width was 12 µs. Because of the decrease of the pulse peak power, the grooves and the heat-affected layer that are defined by the present invention existed in mixture at the irradiated portion. The deviation g of the groove formation positions on both surfaces of the steel sheet was 0.1 mm, and was smaller than the width WL of the grooves in the L direction.

### Steel sheet F:

Only the heat-affected layers were formed on both surfaces of the steel sheet by pulse modulated CO₂ laser. Here, the peak power density of the pulse laser was 0.2 MW/mm², and the pulse time total width was 7 µs. Because of the further decrease of the pulse peak power, only the heat-affected layers defined by the present invention existed on the surface. The deviation g of the formation positions of the heat-affected layers on both surfaces of the steel sheet was 0.1 mm, and was smaller than the width WL of the heat-affected layers in the L direction.

### Steel sheet G:

The steel sheet G was a conventional steel sheet, in which grooves having a depth of 30 µm were formed on only one of the surfaces of the steel sheet by Q switch pulse CO₂ laser. Here, the peak power density of the Q switch pulse CO₂ laser was about 10 to about 30 MW/mm², and the pulse time total width was 20 µs. The laser irradiated portion was evaporated almost fully due to the high peak pulse processing. The heat-affected layers that were defined by the present invention did not exist at the irradiated portion, and only the grooves existed.

### Steel sheet H:

Only the film was evaporated from one of the surfaces of the steel sheet by Q switch pulse CO₂ laser. This was the steel sheet the iron loss of which was lowered by the laser strain. The peak power was 0.1 MW/mm², and the pulse time width was 4 µs. In only this steel sheet, the gap PC of the dotted line in the C direction was 0.5 mm, and the focused and irradiated beam was a circular beam having a diameter of 0.40 mm. Incidentally, stress-relief annealing was not applied to this steel sheet.

The result of the comparison of the magnetic properties of the steel sheets A to G revealed that the grain-oriented electrical steel sheets according to the present invention having either the heat-affected layers or the grooves and the heat-affected layers on both surfaces of the steel sheet exhibited a drop of the iron loss which was equal to, or greater than, that of the conventional grain-oriented electrical steel sheet having similar grooves on only one of the surfaces thereof. In other words, even when the comparison was made in terms of the total of the groove depths of both surfaces, the grain-oriented electrical steel sheets according to the present invention could provide an iron loss reducing effect, that was equivalent to, or higher than, the effect of the prior art, by the grooves shallower than the grooves of the steel sheet of the prior art having the grooves on only one of the surfaces thereof. It was found that in an extreme case, the formation of the grooves were almost unnecessary.

Therefore, it was obvious that the grain-oriented electrical steel sheet having either the heat-affected layers or the grooves and the heat-affected layers on both surfaces thereof according to the present invention was not a mere modification of the conventional grain-oriented electrical steel sheet having the grooves formed on one of the surfaces thereof so as to improve the iron loss, or the conventional grain-oriented electrical steel sheet not having the resistance to disappear by annealing, though the strain was imparted by the laser to the surfaces so as to reduce the iron loss.

The iron loss of the steel sheet H (prior art product), which was lowered by imparting the strain by the reaction of evaporation of the film due to the laser irradiation, was reduced to a value approximate to the limit that was determined by the degree of crystal orientation. In contrast, the grain-oriented electrical steel sheet having either the heat-affected layers or the grooves and the heat-affected layers on both surfaces thereof could provide an iron loss value equivalent to that of the former. When the iron loss drop quantities of the steels A to F were compared, it was found that the iron loss quantity remained substantially constant irrespective of the groove depth from the state where the groove hardly existed to the state where the groove depth was 30 µm.

When the change quantities of the magnetic flux density B8 were compared, it was found that in the steel sheets C and E, in which the grooves having a depth of not greater than 10 µm corresponding to 5% or less of the sheet thickness, were formed in accordance with the present invention, the B8 change quantity was not greater than 30 Gauss and the magnetic flux density B8 hardly changed. This was because the grooves that impeded the magnetic flux density were extremely shallow.

Therefore, the iron loss value could be stably lowered by the present invention irrespective of the depth of the grooves formed in the surface layer of the steel sheet. In other words, grain-oriented electrical steel sheets almost devoid of the drop of the magnetic flux density could be obtained by forming the grooves to a depth of not greater than 5%.

Next, an explanation will be given of the effect brought forth when either the heat-affected layers or the grooves and the heat-affected layers are formed on both surfaces of the steel sheet at positions that form pairs. As described above, Fig. 2(a) is an explanatory view of the deviation g of the formation positions of the grooves formed on both surfaces of the steel sheet by the laser process and the width WL of these grooves in the rolling direction. Figs. 2(b) and 2(c) show the measurement result of the surface coarseness of the steel sheets after stress-relief annealing, that is, the swell deformation quantity h. Symbol X in these drawings represents the groove positions. It can be seen from the drawings that the swell deformation quantity h hardly exists when the position deviation g is below the groove width WL (h = 5 µm when WL(= 0.13 mm) < g (= 0.30 mm) in Fig. 2(b), whereas h ≒ 0 µm when WL(= 0.13 mm) > g (= 0.10 mm) in Fig. 2(c)). This is because the deformation resulting from condensation of the base metal in the melt and resolidification process is balanced on both surfaces and, eventually, further deformation is restricted. When a stacked core is produced by stacking such steel sheets, deterioration of the iron loss properties and the magnetic flux density resulting from the deformation strain does not occur in the same way as when the steel sheets without grooves are stacked.

In the present invention, the deformation on the surface is corrected by the groove formation on both surfaces of the steel sheet. Therefore, there is the possibility that a local strain is imparted into the steel sheet. It is believed that this local stress-strain also exhibits the domain refinement effect.

Though this embodiment explains the case where the dotted line grooves are formed by a pulse laser, the same effect can be naturally obtained by a continuous groove, too.

## Claims

1. A grain-oriented electrical steel sheet **characterized in that** either linear or dotted line-like melted and resolidified layers formed by irradiation of a high energy beam, or linear or dotted line-like grooves and melted and resolidified layers formed by irradiation of a high energy beam are formed on both surfaces of said steel sheet.

2. The grain-oriented electrical steel sheet according to claim 1 wherein similar linear or dotted line-like melted and resolidified layers formed by irradiation of a high energy beam, or similar grooves and melted and resolidified layers are formed on both surfaces of said steel sheet at the exact same positions or slightly deviating positions.

3. The grain oriented electrical steel sheet . according to claim 2 wherein the deviation of the formation positions of said linear or dotted line-like melted and resolidified layers formed by irradiation of a high energy beam, or said linear or dotted line-like grooves and melted and resolidified layers formed by irradiation of a high energy beam is smaller than the width of said linear or dotted line-like melted and resolidified layers formed by irradiation of a high energy beam, or said linear or dotted line-like grooves and melted and resolidified layers formed by irradiation of a high energy beam in a rolling direction.

4. A grain-oriented electrical steel sheet according to any of claims 1 through 3, wherein the depth of said linear or dotted line-like grooves formed on at least one of the surfaces of said steel sheet is not greater than 5% of the sheet thickness.

5. A method of producing a grain-oriented electrical steel sheet **characterized in** either similar linear or dotted line-like melted and resolidified layers formed by irradiation of a high energy beam, or similar linear or dotted line-like grooves and melted and resolidified layers formed by irradiation of a high energy beam are formed on both surfaces of said steel sheet by irradiating a high density energy beam.

6. The method according to claim 5 wherein said melted and resolidified layers or said grooves and melted and resolidified layers are formed on both surfaces of said steel sheet at the exact same positions or slightly deviating positions.

7. The method according to claim 6 wherein the deviation of the formation positions of said linear or dotted line-like melted and resolidified layers formed by irradiation of a high energy beam or said grooves and said melted and resolidified layers is smaller than the width of said linear or dotted line-like melted and resolidified layers formed by irradiation of a high energy beam or said grooves and said melted and resolidified layers in a rolling direction.

8. A method of producing a grain-oriented electrical steel sheet according to any of claims 5 through 7, wherein similar linear or dotted line-like grooves having a groove depth not greater than 5% of the sheet thickness are formed on both, or either one, of the surfaces of said steel sheet.

9. A method of producing a grain-oriented electrical steel sheet according to any of claims 5 through 8, wherein a laser is used to produce said high density energy beam.

## Patentansprüche

1. Kornorientiertes Elektrostahlblech, **dadurch gekennzeichnet, daß** lineare oder strichlinienartige geschmolzene und wiederverfestigte Schichten, die durch Bestrahlung mit einem energiereichen Strahl gebildet sind, oder lineare oder strichlinienartige Nuten und geschmolzene und wiederverfestigte Schichten, die durch Bestrahlung mit einem energiereichen Strahl gebildet sind, auf beiden Oberflächen des Stahlblechs gebildet sind.

2. Kornorientiertes Elektrostahlblech nach Anspruch 1, wobei ähnliche lineare oder strichlinienartige geschmolzene und wiederverfestigte Schichten, die durch Bestrahlung mit einem energiereichen Strahl gebildet sind, oder ähnliche Nuten und geschmolzene und wiederverfestigte Schichten auf beiden Oberflächen des Stahlblechs an genau gleichen Positionen oder leicht abweichenden Positionen gebildet sind.

3. Kornorientiertes Elektrostahlblech nach Anspruch 2, wobei die Abweichung der Bildungspositionen der linearen oder strichlinienartigen geschmolzenen und wiederverfestigten Schichten, die durch Bestrahlung mit einem energiereichen Strahl gebildet sind, oder der linearen oder strichlinienartigen Nuten und geschmolzenen und wiederverfestigten Schichten, die durch Bestrahlung mit einem energiereichen Strahl gebildet sind, kleiner als die Breite der linearen oder strichlinienartigen geschmolzenen und wiederverfestigten Schichten, die durch Bestrahlung mit einem energiereichen Strahl gebildet sind, oder der linearen oder strichlinienartigen Nuten und geschmolzenen und wiederverfestigten Schichten, die durch Bestrahlung mit einem energiereichen Strahl gebildet sind, in Walzrichtung ist.

4. Kornorientiertes Elektrostahlblech nach einem der Ansprüche 1 bis 3, wobei die Tiefe der linearen oder strichlinienartigen Nuten, die auf mindestens einer der Oberflächen des Stahlblechs gebildet sind, nicht größer als 5 % der Blechdicke ist.

5. Verfahren zur Herstellung eines kornorientierten Elektrostahlblechs, **dadurch gekennzeichnet, daß** ähnliche lineare oder strichlinienartige geschmolzene und wiederverfestigte Schichten, die durch Bestrahlung mit einem energiereichen Strahl gebildet sind, oder ähnliche lineare oder strichlinienartige Nuten und geschmolzene und wiederverfestigte Schichten, die durch Bestrahlung mit einem energiereichen Strahl gebildet sind, auf beiden Oberfläche des Stahlblechs durch Bestrahlen mit einem Strahl hoher Energiedichte gebildet werden.

6. Verfahren nach Anspruch 5, wobei die geschmolzenen und wiederverfestigten Schichten oder die Nuten und geschmolzenen und wiederverfestigten Schichten auf beiden Oberflächen des Stahlblechs an genau gleichen Positionen oder leicht abweichenden Positionen gebildet werden.

7. Verfahren nach Anspruch 6, wobei die Abweichung der Bildungspositionen der linearen oder strichlinienartigen geschmolzenen und wiederverfestigten Schichten, die durch Bestrahlung mit einem energiereichen Strahl gebildet sind, oder der Nuten und der geschmolzenen und wiederverfestigten Schichten kleiner als die Breite der linearen oder strichlinienartigen geschmolzenen und wiederverfestigten Schichten, die durch Bestrahlung mit einem energiereichen Strahl gebildet sind, oder der Nuten und der geschmolzenen und wiederverfestigten Schichten in Walzrichtung ist.

8. Verfahren zur Herstellung eines kornorientierten Elektrostahlblechs nach einem der Ansprüche 5 bis 7, wobei ähnliche lineare oder strichlinienartige Nuten mit einer Nutentiefe, die nicht größer als 5 % der Blechdicke ist, auf beiden oder einer der Oberflächen des Stahlblechs gebildet werden.

9. Verfahren zur Herstellung eines kornorientierten Elektrostahlblechs nach einem der Ansprüche 5 bis 8, wobei ein Laser verwendet wird, um den Strahl hoher Energiedichte zu erzeugen.

## Revendications

1. Tôle d'acier électrique à grains orientés, **caractérisée en ce que** soit des couches fondues et resolidifiées sous forme linéaire ou semblables à une ligne formée de tirets et formées par irradiation avec un faisceau de haute énergie, soit des rainures et des couches fondues et resolidifiées, sous forme linéaire ou sous forme de lignes formées de tirets sont formées par irradiation avec un faisceau de haute énergie sont formées sur les deux surfaces de ladite tôle d'acier.

2. Tôle d'acier électrique à grains orientés selon la revendication 1, dans laquelle des couches fondues et resolidifiées similaires sous forme linéaire ou semblables à une ligne formée de tirets et formées par irradiation avec un faisceau de haute énergie, soit des rainures et des couches fondues et resolidifiées similaires sont formées sur les deux surfaces de ladite tôle d'acier exactement dans les mêmes positions ou dans des positions légèrement décalées.

3. Tôle d'acier électrique à grains orientés selon la revendication 2, dans laquelle l'écart des positions de formation desdites couches fondues et resolidifiées sous forme linéaire ou semblables à une ligne formée de tirets et formées par irradiation avec un faisceau de haute énergie, ou desdites rainures et desdites couches fondues et resolidifiées, sous forme linéaire ou sous forme de lignes formées de tirets est inférieur à la largeur desdites couches fondues et resolidifiées sous forme linéaire ou semblables à une ligne formée de tirets et formées par irradiation avec un faisceau de haute énergie, ou desdites rainures et desdites couches fondues et resolidifiées, sous forme linéaire ou sous forme de lignes formées de tirets dans une direction de laminage.

4. Tôle d'acier électrique à grains orientés selon l'une quelconque des revendications 1 à 3, dans laquelle la profondeur desdites gorges de forme linéaire ou en forme de lignes formées de tirets, formées sur au moins l'une des surfaces de ladite tôle d'acier, n'est pas inférieure à 5 % de l'épaisseur de la tôle.

5. Procédé pour fabriquer une tôle d'acier électrique à grains orientés, **caractérisé en ce que** soit des couches similaires fondues et resolidifiées sous forme linéaire ou semblables à une ligne formée de tirets et formées par irradiation avec un faisceau de haute énergie, soit des rainures et des couches fondues et resolidifiées similaires sous forme linéaire ou sous forme de lignes formées de tirets et formées par irradiation avec un faisceau de haute énergie sont formées sur les deux surfaces de ladite tôle d'acier, par irradiation avec un faisceau d'énergie à haute densité.

6. Procédé selon la revendication 5, dans lequel lesdites couches fondues et resolidifiées ou lesdites rainures et lesdites couches fondues et resolidifiées sont formées sur les deux surfaces de ladite tôle d'acier exactement dans les mêmes positions ou dans des positions légèrement décalées.

7. Procédé selon la revendication 6, selon lequel l'écart des positions de formation desdites couches fondues et resolidifiées de forme linéaire ou en forme de lignes formées de tirets et formées par irradiation avec un faisceau de haute énergie ou desdites rainures et desdites couches fondues et resolidifiées de forme linéaire ou en forme de lignes formées de tirets et formées par irradiation avec un faisceau de haute énergie est inférieur à la largeur desdites couches fondues et resolidifiées dans une direction de laminage.

8. Procédé pour fabriquer une tôle d'acier électrique à grains orientés selon l'une quelconque des revendications 5 à 7, selon lequel des rainures similaires de forme linéaire ou en forme de lignes formées de tirets possédant une profondeur de rainure non supérieure à 5 % de l'épaisseur de la tôle sont formées sur les deux surfaces ou sur l'une ou l'autre des surfaces de ladite tôle d'acier.

9. Procédé pour fabriquer une tôle d'acier à grains orientés selon l'une quelconque des revendications 5 à 8, selon lequel un laser est utilisé pour produire ledit faisceau d'énergie à haute densité.
